# EUROPEAN PATENT SPECIFICATION

(11) **EP 3 661 357 B1**
(45) Date of publication and mention of the grant of the patent: **17.03.2021**
(21) Application number: 18752141.4
(22) Date of filing: 06.08.2018
(51) Int. Cl.: A01K 1/00, F16B 7/04

(54) **NECK RAIL SYSTEMS FOR ANIMAL STALLS**
NACKENBEGRENZUNGSSYSTEM FÜR TIERSTÄLLE
SYSTÈMES DE BARRE DE NUQUE POUR ÉTABLES

(30) Priority: 04.08.2017 GB 201712547
(43) Date of publication of application: 10.06.2020
(73) Proprietor: Earls, Michael, Athenry, County Galway (IE)
(72) Inventor: Earls, Michael, Athenry, County Galway (IE)
(74) Representative: FRKelly
(86) International application number: PCT/EP2018/071304
(87) International publication number: WO 2019/025638

(56) References cited:
- EP-A1- 3 135 104
- EP-A2- 1 459 623
- WO-A1-2013/031945
- US-A- 2 857 187

## Description

### Technical Field

This invention relates to neck rail systems for animal stalls. It has particular application in stalls for cattle and other Lactating animals.

### Background art

Neck rails are commonly provided in cattle stalls to lie above the neck of the animal when the animal is correctly positioned in the stall in a standing position.

The purpose of the neck rail is twofold. Firstly, the neck rail limits forward movement when the animal enters the stall and lunges forward during rising and reclining. Secondly, it discourages the animal from defecating or urinating in the stall. Positioned properly, the neck rail will allow the animal to stand with a level back and legs squarely beneath her, and with all four feet in the stall, the top of her neck touching the neck rail comfortably. A properly positioned neck rail takes account of lunge space and encourages the animal to defecate behind the stall.

Several studies have confirmed that a proper neck rail placement is important not only for stall cleanliness but also for animal health in terms of ensuring clean udders and avoiding hoof and leg problems attributable to improper hoof placement. See for example "Neck-rail position in the free stall affects standing behavior and udder and stall cleanliness", Fregonesi JA et al., J Dairy Sci. 2009 May; 92(5):1979-85. doi: 10.3168/jds.2008-1604; "Improving Cow Comfort Through Proper Neck rail Placement", Jeffrey Bewley, Kentucky Dairy Notes, September 2008, accessed at https://afs.ca.uky.edu/files/improving_cow_comfort_through_proper_neck_rail_placem ent.pdf.

Steel neck rails are known which span a range of adjacent stalls and which are clamped with U-bolts at each stall divider. In some cases it is possible to adjust the height of the neck-receiving portion for the entire group of stalls by rotation of the neck rail when it is being fitted, but the solution is not attractive due to its inflexibility, the difficulty of adjustment, the fact that it needs to be tailor made to particular stall widths, and the fact that the animals may dislodge and rotate the neck rail changing the height of the neck-receiving portion.

WO 2013/031945 relates to a holding apparatus comprising a screw which is formed of an approximately square pole-shaped member and a locking bolt screwed with the member to be screwed with the locking bolt disposed at an approximate center of an upper surface of the member; a second shaft hole which passes through a front surface and a back surface; a first shaft hole which passes through a left side surface and a right side surface; an approximately door-shaped slit which passes between the screw and the second shaft hole and extends downward through both lateral outer sides of the second shaft hole; a short slit disposed at one side portion of the second shaft hole; and a left list and a right slit, each of which extends from one side to the other side of the approximately door-shaped slit.

US 2 857 187 relates to a device for achieving angular adjustment between associated lever and shaft assembly.

EP 3135104 relates to a coupling component for an animal cubicle, comprising an engagement member, a pipe collar transverse to the engagement member for receiving a neckrail, a flexible member connecting the engagement member to the pipe collar such that the flexible member encircles a space adjacent the pipe collar, wherein deformation of the flexible member allows relative movement between the engagement member and the pipe collar.

Accordingly, it would be advantageous to provide a neck rail which permits better placement in an animal stall.

### Disclosure of the Invention

There is provided a neck rail system for an animal stall, the system comprising:
a neck rail having first and second end segments defining a common axis therebetween and a middle segment connecting the end segments, the middle segment having a neck-receiving portion which is offset from the common axis and which is adapted to accommodate the neck of an animal in use; and
first and second receivers adapted to receive the first and second end segments respectively;
wherein the first receiver and first end segment of the rail are provided with complementary locking formations which can be brought into and out of engagement by axial displacement of the first end segment relative to the first receiver,
wherein said complementary locking formations prevent angular rotation of the neck rail relative to the first receiver when engaged with one another;
at least a portion of the neck rail being resiliently flexible, permitting it to be flexed to increase or decrease the distance between the end segments for axial engagement with the receivers;
whereby in use a flexing force may be applied to the neck rail to reduce the distance between the first and second ends sufficiently to permit them to be inserted in the first and second receivers respectively, and the flexing force removed permitting the first and second ends to axially displace into the first and second receivers respectively and thereby engage said complementary locking formations.

The neck rail systems of the invention enable the rapid installation of neck rails across stalls of varying widths, with the flexible neck rail portions enabling an installer to flex the neck rail, insert the ends into receivers provided on either side of the stall, and then permit the flexed neck rail to relax and the ends thereof will thereby engage with and lock in position within the complementary locking receivers. A single rail design will, due to its flexibility, typically fit a range of stall widths according to the degree of flexibility, and by providing a small number of rail lengths, a small number of width ranges can be used to cover all typical stall widths.

Preferably, the resiliently flexible portion of the neck rail permits the first and second ends to be drawn closer together when a flexing force is applied and to move apart to a relaxed state when the flexing force is removed.

Preferably, the second receiver and second end segment of the rail are also provided with complementary locking formations which can be brought into and out of engagement by axial displacement of the second end segment relative to the second receiver.

Preferably, the first and second receivers are provided with openings for receiving the end segments, the openings being spaced apart by a distance less than the distance between the first and second end segments of the neck rail when the neck rail is in a relaxed state.

In this way, the neck rail must be flexed to insert and also to remove it from the receivers, which assists in preventing unintended removal.

Preferably, the first and second receivers each define a fully engaged position for the first and second end segments, respectively, and the first and second receivers are spaced apart by a distance such that the first and second end segments reach the fully engaged position as the neck rail relaxes towards or reaches a fully relaxed state.

Thus, the maximum width spanned by a given neck rail is designed to be the width defined by the receiver spacing when they receive the end segments of a neck rail in fully relaxed state. Lesser widths are catered for by spacing the receivers to receive the end segments of the same neck rail when not yet fully relaxed.

Preferably, the neck rail is formed of a resilient, flexible moulded material having a convex curved neck-receiving portion connecting a pair of straight end segments, and further comprising an integrally formed set of protrusions on the inner surface of the convex curved neck-receiving portion which are adapted to serve as a scratcher for the neck of an animal.

Conventional neck rails are made of stainless steel members which do not have such integrated protrusions. The provision of protrusions assists in the comfort of animals in the stall, which increases animal welfare by making the animals more content.

Preferably, the convex curved neck-receiving portion comprises a connecting curved segment at either end transitioning to the respective straight end segments and a curved apex segment between the connecting curved segments.

In some embodiments, said integrally formed set of protrusions comprises protrusions disposed at the curved apex segment.

Alternatively or additionally, said integrally formed set of protrusions may comprise protrusions disposed at one or both of the connecting curved segments.

Preferably, the complementary locking formations permit the insertion of the neck rail into the receivers in a plurality of angular orientations, with a preferred angular orientation being defined such that the protrusions are directed generally downwardly.

The generally downwardly directed protrusions may include a component of rearward or forward direction against which the animal may scratch by forward or rearward movement.

Preferably, the first receiver and first end segment are provided with respective formations to receive a fastener when engaged in the preferred angular orientation.

Thus, the preferred design of neck rail can be secured at each end at the selected angular position, by location of a respective rail end in or on a respective receiver, with complementary keyed formations at each end holding the rail at the selected angle relative to the receiver.

Preferably, at least a portion of the neck rail is resiliently flexible, permitting it to be flexed to increase or decrease the distance between the end segments for axial engagement with the receivers to accommodate different animal sizes and cubicle widths.

Thus, in a preferred installation method the installer will flex the rail to fit it into or onto the receivers. The rail will tend to a relaxed state with the complementary keyed formations engaged, but can be adjusted by flexing it to disengage the formations, rotating the rail, and then releasing it to engage the formations.

In preferred embodiments, the neck rail is adapted to span a single animal stall and has a single neck-receiving portion to accommodate the neck of a single animal.

In certain embodiments, said complementary locking formations define a plurality of fixed angular mounting orientations of the neck rail relative to the first receiver.

This permits the customisation of the neck rail height and position in a standardised size of stall. With receivers fitted at either side of the stall at a predetermined location (typically mounted on an upper side rail), the rotation of the neck rail relative to the receivers causes the offset neck-receiving portion to be rotated about the common axis of the neck rail ends, at a distance therefrom. In this way, the height of the neck-receiving portion can be selected, and then fixed by axially engaging the complementary locking formations.

In contrast to conventional neck rails, which typically extend across a bank of animal stalls at a fixed height, the neck rail systems with adjustable height and multiple angular positions disclosed herein can be adjusted without changing the stall design, and can be individualised to each stall according to the size of animal accommodated in that stall.

Preferably, in such systems, the neck rail may be rotated to a desired angular position while the complementary locking formations are disengaged, and thereby the height of the neck-receiving portion may be varied relative to the receivers, prior to engaging the keyed formations by axial displacement of the first end relative to the first receiver and engagement of the locking mechanism.

Preferably, the first receiver comprises a socket that receives the first end segment, such that when the end segment is fully inserted in the socket the complementary locking formations are engaged and the neck rail is secured against rotation.

Further, preferably, the socket and first end segment are dimensioned to permit the first end segment to be partially withdrawn axially to a position where it is still located within the socket and secured in position against lateral translational movement, but the complementary locking formations are no longer engaged and the end segment can be rotated.

This can be achieved by having a socket in the form of a closed bore which widens towards its opening, so that in the wider section nearer the opening the end segment is freely rotatable about its axis and is axially movable but is still constrained within the bore against lateral movement.

Preferably, at least one of the first and second receivers is integrally formed as part of a double receiver member having a mount adapted for mounting on the side member of a stall, having said first or second receiver directed in the direction of said stall when mounted in position, and having a further receiver forming part of an adjacent neck rail system directed in the direction of an adjacent stall on the other side of the side member.

Further, preferably, the double receiver member comprises an integrally formed elastomeric body having a through bore for receiving a rail, said rail being the side member of the stall, and having said first or second receiver and said further receiver formed as sockets directed transverse to the through bore in opposed directions.

In a preferred embodiment, said first receiver comprises a female socket having a portion of the complementary locking formations disposed internally of the socket and wherein said first end of the neck rail comprises a male rail end dimensioned to fit in said female socket and having a portion of the complementary locking formations disposed on the exterior thereof.

Preferably, the neck rail system comprises a securing mechanism to prevent the first end segment of the neck rail from axially disengaging from the first receiver.

Suitably, the locking member comprises a fastener passing through a receiving hole in the first end and preventing the first end from being withdrawn from the first receiver when installed.

Advantageously, said complementary locking formations comprise a series of angularly spaced protrusions and corresponding angularly spaced recesses.

Advantageously, the complementary locking formations may comprise a splined surface on an external cylindrical surface of one of the first end segment and first receiver, and a complementary splined surface on an internal socket surface of the other of the first end segment and first receiver.

Preferably, the complementary locking formations comprise an external polygonal surface of one of the first end member and first receiver, and a complementary internal polygonal surface on the other of the first end member and first receiver.

In a preferred embodiment, the polygonal surfaces have a square cross-section.

Preferably, the external square surface is provided on the first end segment and the internal square surface is provided as a square receiving hole on the receiver.

Preferably, the complementary locking formations comprise complementary shaped male and female members, one of which is provided on the first end segment and the other of which is provided on the first receiver.

As an alternative to surfaces shaped to admit the end segment into the receiver in multiple orientations, the complementary locking formations may be provided to permit only a single angular orientation for engaging the first end segment with the first receiver.

The invention also provides a neck rail for an animal stall, comprising:
first and second end segments defining a common axis therebetween and a middle segment connecting the end segments, the middle segment having a neck-receiving portion which is offset from the common axis and which is adapted to accommodate the neck of an animal in use,
wherein the first end segment is provided with a shaped surface preventing rotation of the neck rail when the end segment is received by a complementary shaped receiver;
at least a portion of the neck rail being resiliently flexible, permitting it to be flexed to increase or decrease the distance between the end segments for axial engagement with respective first and second receivers provided on an animal stall;
whereby in use a flexing force may be applied to the neck rail to reduce the distance between the first and second ends sufficiently to permit them to be inserted in first and second receivers respectively, and the flexing force removed permitting the first and second ends to axially displace into the first and second receivers respectively and thereby engage said complementary keyed formations.

Preferably, the neck rail has a convex curved neck-receiving portion connecting a pair of straight end segments, and wherein the inner surface of the convex curved neck-receiving portion has an integrally formed set of protrusions adapted to serve as a scratcher for the neck of an animal.

There is also provided a receiver for a neck rail for an animal stall, comprising a body for mounting on a side member of an animal stall, the body having a socket with an internal shape, the socket being adapted to receive an end of a neck rail, and the internal shape of the socket being adapted to prevent rotation of a complementary shaped end segment of a neck rail when received in the socket by axial displacement.

Preferably, the body of the receiver has a pair of said sockets, directed in opposite directions such that when the body is mounted on a side member separating a pair of adjacent animal stalls, one of the pair of sockets is directed towards one of the pair of stalls, and the other of the pair of sockets is directed towards the other of the pair of stalls.

Preferably, the socket comprises an outer bore section of greater diameter disposed towards an opening of the socket and having said internal shape in an inner bore section disposed internally of the body, such that a neck rail end with said complementary shape is rotatable when situated in the outer bore section and is locked against rotation when situated in the inner bore section.

### Brief Description of the Drawings

The invention will now be further illustrated by the following description of embodiments thereof, given by way of example only with reference to the accompanying drawings, in which:
Fig. 1 is a perspective view of a stall with a neck rail fitted;
Fig. 2 is a reverse perspective view of the stall of Fig. 1;
Fig. 3 is a plan view from above of the stall of Fig. 1;
Fig. 4 is a perspective view, similar to Fig. 1, with an enlarged detail of the receiver for the neck rail;
Fig. 5 is a front elevation of the neck rail used in the stall of Fig. 1, when angled as shown in Fig. 1;
Fig. 6 is a plan view from above of the neck rail used in the stall of Fig. 1, when angled as shown in Fig. 1;
Fig. 7 is a cross section through the line VII-VII of Fig. 5;
Fig. 8 is a perspective view of a section of the bar from which the neck rail of Fig. 5 is formed;
Fig. 9 is a front elevation of the receiver of the stall of Fig. 1;
Fig. 10 is a plan view from above of the receiver of Fig. 9;
Fig. 11 is a side elevation of the receiver of Fig. 9;
Fig. 12 is a cross-section through the receiver of Fig. 9, taken along the line XII-XII;
Fig. 13 is a side view of the stall of Fig. 1, showing a range of angular movement and the stop positions provided by a neck rail system;
Fig. 14 is a front elevation of an alternative embodiment of neck rail;
Fig. 15 is a magnified detail of the first end segment of the neck rail of Fig. 14;
Fig. 16 is an end view of the neck rail of Fig. 14;
Fig. 17 is a magnified detail of the first end segment of the neck rail of Fig. 14, shown in an end view;
Fig. 18 is a perspective view of a receiver for use with the neck rail of Fig.14;
Fig. 19 is a front view of the receiver of Fig.18;
Fig. 20 is a cross sectional view of the receiver of Fig. 18;
Fig. 21 is an end view of the receiver of Fig. 18; and
Fig. 22 is a perspective view of the receiver of Fig. 18 with a neck rail, similar to that of Fig. 14 but with a different arrangement of neck scratcher protrusions, shown in situ.

### Detailed Description of Preferred Embodiments

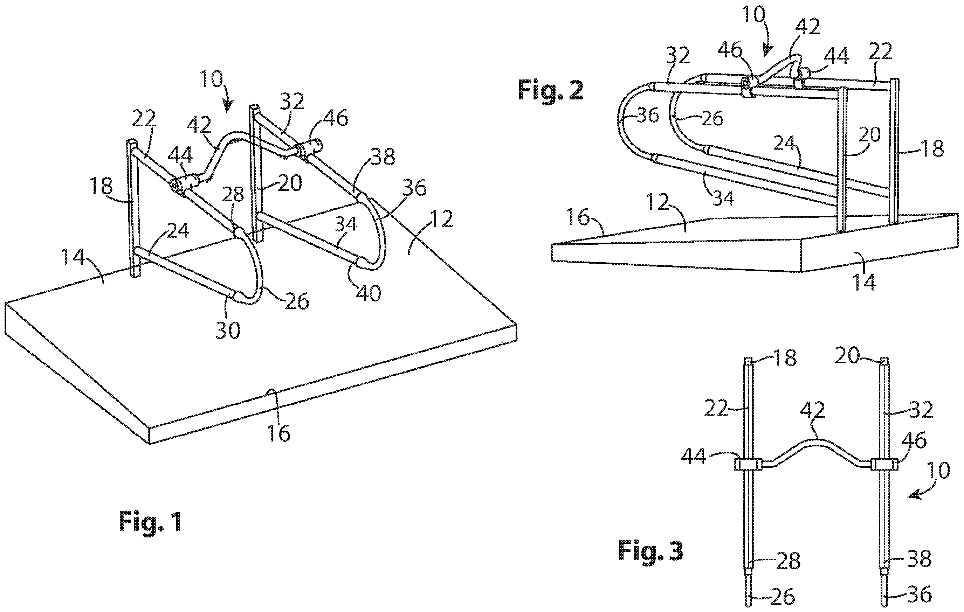

Referring to Figs. 1-4, there is indicated generally at 10 a stall for an animal. The drawing shows a stall bed 12 having a head end 14 and a tail end 16. In use a rubber mat (not shown) will typically be placed on the floor to increase the comfort of, and reduce injury risk to, a lactating mammal located in the stall. The term "lactating mammal" is intended to denote a domesticated mammal of a species which lactates, regardless of the animal's sex or whether it is actually lactating. Bovine animals are the predominant occupants of stalls of this type, and therefore for the purposes of this description, the stall will be described in relation to its use for cattle, without intending to limit the application of the invention to this preferred use.

A pair of upright members 18, 20 are mounted in the bed at the head end. Projecting back from the upright 18 towards the tail end are a horizontal top rail 22 and a bottom rail 24 that is positioned directly below the top rail 22 and is angled slightly upwards as it projects rearwardly. A C-shaped connector 26 is mounted on the rearward ends 28, 30 of the top rail 22 and bottom rail 24, respectively. Similarly, projecting back from the upright 20 there is an identical top rail 32 and bottom rail 34, with a C-shaped connector 36 mounted on the rearward ends 38, 40 of the top and bottom rails 32, 34.

It will be apparent to those skilled in the art that the upright member 18, top rail 22, bottom rail 24, and connector 26 together provide a first side barrier for a stall, and the upright member 20, top rail 32, bottom rail 34, and connector 36 together provide a second side barrier for the stall.

It will also be apparent that in accordance with conventional stall design practice a series of such side barriers are positioned at regular intervals along the bed 12, the same as the interval between the two side barriers shown in Figs. 1-4, so that each side barrier (other than those at the ends of the series of barriers) forms a divider between two adjacent stalls. Thus, the single stall shown in Figs. 1-4 is to be understood as being one of a number of identical adjacent stalls, each of which is defined between a pair of side barriers disposed at intervals in a series, with only two such side barriers being shown for ease of description.

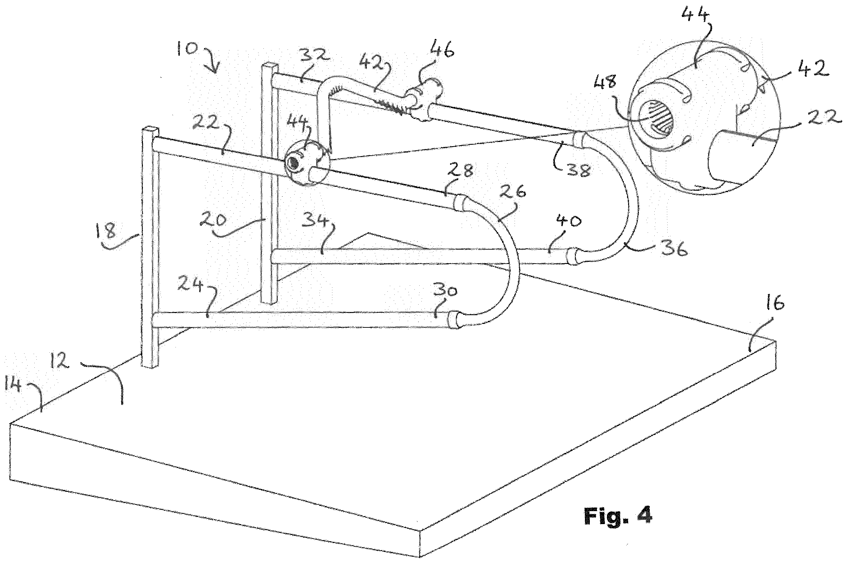

A neck rail 42 spans the gap between the two side barriers, and is mounted at either end in a respective receiver 44, 46. One of the receivers 44 is mounted on top rail 22 and the other receiver 46 is mounted on top rail 32. The receivers, which are described in further detail below, can be seen to have a socket on either side for receiving an end of a respective neck rail on each side. The enlarged detail in Fig. 4 shows the unoccupied socket 48 facing towards the viewer, which in use would be occupied by another neck rail spanning an adjacent stall closer to the viewer, unless the illustrated stall was at the end of a run of stalls.

It will be appreciated that the mounting of the receivers on the top rails in the illustrated embodiment is only one option. For different types of stall designs, the neck rail receivers can be mounted in any suitable location, such as on or in a wall, or on another structural side member.

When a cow enters the stall, it does so by walking forward from the tail end. The neck rail is positioned at a height which prevents the cow from walking past this point, and this the cow is encouraged to stand with its head lowered and neck against the neck rail, at which point it will have all four feet on the bed of the stall. It can move by lunging forward in its normal motion from this position to move to a lying position, when it is again correctly positioned in the stall. Thus the neck rail promotes proper positioning of the animal in both standing and lying poses.

The height of the neck rail is of primary importance in ensuring that the animal is positioned correctly. As the skilled person will be aware, even within a given breed of animal there will be significant height variations due to age and individual animal sizes. With this in mind the neck rail and receivers are designed to allow easy height adjustment and to be secured against unintended changes in height, and they are further designed to be used in a range of stall widths.

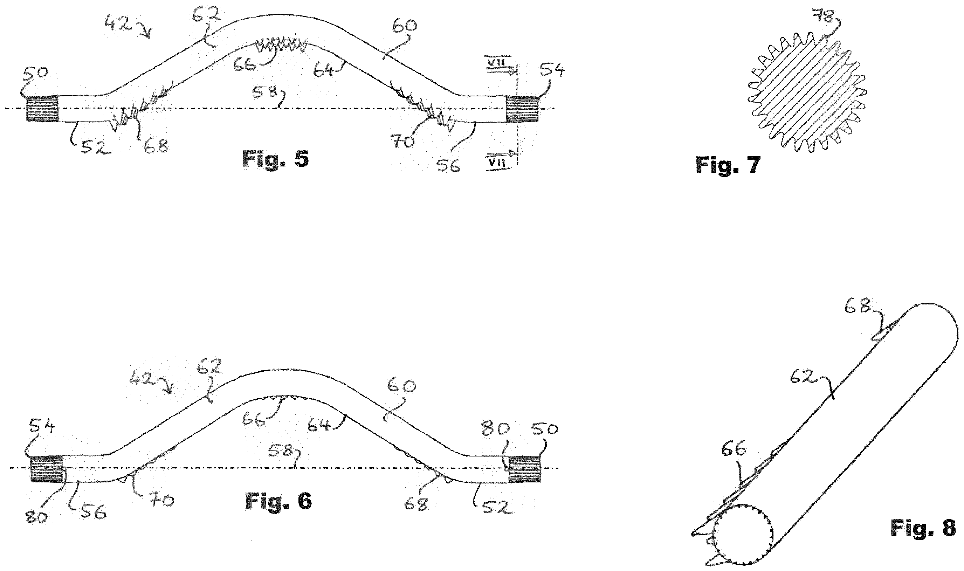

Figs. 5 and 6 show the neck rail 42 in more detail but without the receivers, from the front and from above, respectively. The views of Fig. 5 and 6 assume that the neck rail is still angled as shown in Fig. 1, i.e. at about a 45 degree tilt forward from the vertical towards the head end, with Fig. 5 viewing the neck rail from directly behind and Fig. 6 from directly overhead.

The neck rail is formed from an elongated member with a first end 50 provided on a first straight end segment 52, and a second end 54 on a second straight end segment 56. The end segments define a common axis 58 therebetween.

As seen in Fig. 7, the ends of the neck rail are formed with a splined cross-section, the purpose of which will be apparent when the receivers are described in more detail. Briefly, the splined formations are a means of providing keyed engagement with complementary formations on the receivers, and in particular they allow axial engagement with and disengagement from a correspondingly splined socket portion of a receiver, by axial displacement of the end segments relative to the receivers. Other cross-sections than the splined design shown in Fig. 7 are also possible which achieve the same purpose.

A bowed middle segment 60 connects the end segments, and provides a convex curved neck-receiving portion 62 which is offset from the common axis 58 and which is adapted to accommodate the neck of an animal in use. The inner surface 64 of the convex curved neck-receiving portion 62 has an integrally formed set of protrusions 66 adapted to serve as a scratcher for the neck of an animal. Further sets of protrusions 68, 70 are provided at either end of the middle segment, where it meets the end segments.

Referring additionally to Fig. 8, which shows a straight section of material for a neck bar before it is shaped into the curved final shape, it can be seen that when the shape is formed the protrusions or teeth providing the scratcher units are disposed facing at an angle, rather than directly downwardly. Therefore, as seen in Figs, 5 and 6, when the neck bar is positioned in the "neutral" angled position as seen in Figs. 1-4, the scratcher units face downward and backward in use, i.e. towards the tail end of the stall and allowing the animal to scratch against them by pushing forward into the neck rail.

Preferably, at least a portion of the neck rail is resiliently flexible, permitting it to be flexed to increase or decrease the distance between the end segments 52, 56 for axial engagement with the receivers. This means both that it can be bent or sprung to a shorter length and then inserted into the receiver sockets at each end, and that there is a degree of variation allowed for the separation between the receivers, which the neck rail will accommodate, making it more adaptable than conventional steel neck rails.

In the preferred embodiment shown, the neck rail is made of a single integrally formed elastomeric body, such as of rubber. A preferred material is rubber with shore hardness of between 65 & 95 Shore A. In this way it can be moulded with integral protrusions or teeth 66, 68, 70, and with the splined ends integrally formed. It can be moulded in its final shape, or moulded as a straight length and then in a subsequent forming step, it can be formed into the bowed shape shown in Figs. 5 and 6.

Making the entire neck rail as a single elastomeric body thus has advantages both during manufacture and also during installation, as it permits a relatively stiff neck rail to have a moderate amount of flexibility along its length, aiding in its installation when it is bent to a shorter length and then allowed to spring back towards a relaxed state, this spring-back also driving the splined ends home within correspondingly shaped receiver sockets.

The use of a flexible, unitary neck rail is also advantageous as it is more accommodating and comfortable to the animal when it butts up against or scratches itself on the neck rail.

As an alternative, the neck rail could be formed of different sections, with some being rigid and at least one providing the required degree of flexion.

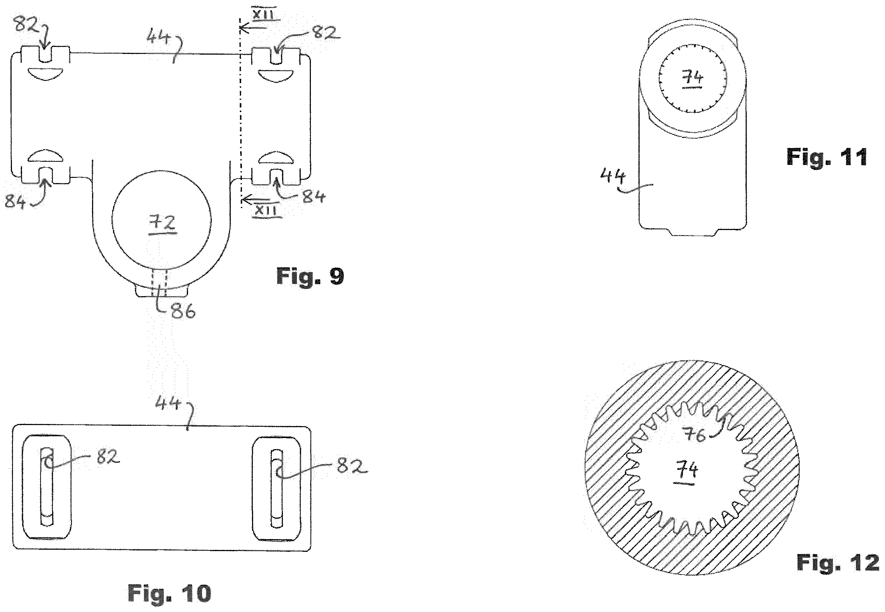

Figs. 9-11 show the receiver 44 from the front, top and side, respectively. The receiver is formed of a unitary body made of rubber, having two perpendicular channels formed in it.

A lower channel 72 (Fig. 9) accommodates the top rail of a stall side barrier. It is shaped to tightly receive the top rail and can be installed at the time that the stall is built, or retrofitted by sliding it onto the rail when the rail is disengaged from the upright or alternatively when the C-shaped connector is removed to allow access. A through hole 86, shown in broken lines in Fig. 9, is provided at the underside of the lower channel's wall, for fixing the receiver in place to the top rail, thereby preventing it from twisting or sliding out of position. A self-tapping screw is fastened through this hole, into and through the lower sidewall of the top rail (which is formed of a 12.5mm plastic pipe). The tip of the screw thereby ends up located within the interior of the rail and a washer at the head of the screw secures the receiver firmly in position on the rail.

An upper channel 74 runs transversely to the top rail in use, and provides a double socket, i.e. one socket facing into the stall on either side of the top rail. Each socket has a smooth bore at its outermost portion, which is of a greater diameter than the splined end of the neck rail (Fig, 7). As seen in Fig. 12, which shows a cross-section through the upper channel at the right-hand socket, a section of the channel is formed with a female splined surface 76 which is dimensioned to receive the complementary male splined surface 78 of the neck rail (Fig. 7).

Accordingly, when an end 50, 54 of a neck rail is partially inserted into the channel 74, to a depth that is within the smooth bore portion and is short of the splined female surface 76, it can be freely rotated. In this way the height of the neck-receiving portion of the neck rail can be adjusted due to its offset from the common axis 58 between the neck rail ends (this also being the axis off the upper channel 74 in use). When the desired angle has been found, the neck rail is permitted to relax and the splined male end of the neck rail is received in and mates with the splined female surface 76. As long as it remains inserted in this way, it is locked against rotation.

The spline profile chosen has 25 teeth, meaning that it is adjustable in 14.4 degree increments, but this is of course a matter of choice for the designer and the skilled person is in no way constrained to this spline design. Finer or coarser adjustment steps are readily achievable with a splined design by varying the number of teeth.

The skilled person will appreciate that other complementary keyed shapes can be used which allow for similar axial insertion and locking against rotation once inserted, such as polygonal, star-shaped, other toothed shapes, shapes having alternative angularly spaced protrusions and corresponding angularly spaced recesses, or shapes having one (or several) radial projections that can be received in any one of several angularly offset slots. All that matters is that the formations can provide a plurality of fixed angular mounting orientations of the neck rail relative to the receiver.

The skilled person will also appreciate that while the described embodiment has a male neck rail end and a female receiver, the opposite arrangement could equally be employed, with a male receiver being designed to receive a female neck rail end thereon. Alternatively again, the mating need not be male-to-female, but could be with complementary axially engaging formations, such as castellated or splined ends that mate onto one another.

To prevent the withdrawal of the neck rail end from its engagement in the socket of the receiver, the neck rail ends are each provided with a respective receiving hole 80 to receive a bolt or similar fastener, as seen in Fig 6. As seen in Fig. 9, at either end of the receiver's upper channel, there is provided a top slot 82 and a bottom slot 84. When a neck rail is fully inserted into the receiver with the complementary keyed projections in engagement, the hole 80 is positioned at the same depth into the receiver socket as the slot positions, so that a bolt or other fastener can be passed through the slot 82, hole 80 and slot 84. The neck rail end is thereby secured against axial movement for removal and as a result, secured against rotational movement relative to the receiver.

The hole 80 is drilled through the neck rail of Figs. 5 and 6 at an offset angle relative to plane in which the neck-receiving portion 62 lies relative to the axis 68, so that when the neck rail is tilted approximately 45 degrees forward as seen in Figs. 1-4, the hole 80 is vertical. The top slot 82 and bottom slot 84 are centred on the vertical axis, and extend through an angle of approximately +/- 30 degrees on either side of vertical. This means that a bolt, passing through both slots and contained in the hole 80 through the neck rail, can similarly move through a range of about 60 degrees centred on the vertical.

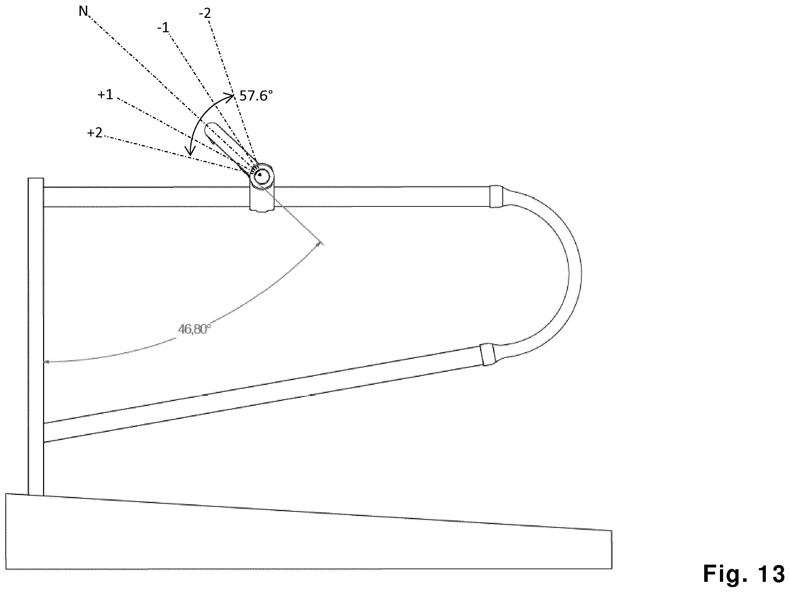

Referring to Fig. 13, it can be seen that in this embodiment the slot length and splined surfaces combine to give five positions of adjustment for the neck rail. It will be recalled that the splined surfaces have 25 teeth in this particular embodiment. Therefore, if the neck rail is in a "neutral" position N when positioned as drawn in Fig. 13 (this being the same position as shown in Figs. 1-4), then it can be adjusted forward and downward by the interval defined by one tooth (14.4 degrees) to the position +1, or by two teeth (28.8 degrees) to the position +2, before the bolt meets the stop at the end of the slot. Similarly it can be adjusted backward and upward from neutral by one or two teeth intervals (14.4 or 28.8 degrees to positions -1 or -2 respectively) before meeting the stop at the other end of each slot. This provides an angular range of movement, in this particular embodiment, of 57.6 degrees centred on the neutral position N, covered by five stop positions (-2, -1, neutral, +1, +2) which can be selected by the person installing or adjusting the neck rail. More or fewer positions, and a greater or lesser range of movement, can be obtained by altering the spacing of splines (or other angular features) and by extending or shortening the slots in this embodiment.

It is to be noted that the particular arrangement of a bolt, slots and through hole is just one possibility for preventing axial movement, and it is just one way of defining a range of permitted angular movement. The skilled person will be able to provide many alternative locking mechanisms to prevent the end segment of the neck rail from axially disengaging from the receiver. For example, a latch on the receiver could engage a formation on the neck rail (or vice versa), a jubilee clip or similar clamping mechanism could secure the neck rail and receiver together, a fastener could be driven through the assembled components, adhesives or epoxies could secure the parts in place, heat treatment could mould them together, a collar could be secured over the two parts, and so on. Angular limitations can be added to these mechanisms as required.

While the system described above contemplates a neck rail that is compressed during insertion and then permitted to relax, one could use a neck rail that is shorter than the distance between the receivers and which must be stretched to engage the complementary formations. The locking mechanism would retain the ends in place against the natural urge of the neck rail to relax to a shorter length.

Furthermore, while the described system has identical receivers at each side of the stall, it is not strictly necessary to have complementary keyed surfaces on both ends of the neck rail and on both receivers. One could have a neck rail with one smooth end, and a matching receiver with a smooth socket permitting free rotation at that end, and rely entirely on the rotational locking being provided only at the other end, though the arrangement with both ends locked against rotation is more secure and provides a sturdier neck rail, particularly for larger, stronger animals.

As a further contemplated variation, it will be evident that the receiver may be designed to receive only a single neck rail. The double socket, accommodating a neck rail extending from either side, is a preferred design but by no means a necessary one.

While the preferred embodiment is of a single-width neck rail for spanning a single stall, it can be adapted to a multi-stall design which is dimensioned to span across multiple stalls and has a plurality of neck-receiving portions, one for each stall. This design has the complementary keyed formations on the neck rail end and on a receiver at one or both ends, and can be secured by clamping to intervening stall dividers.

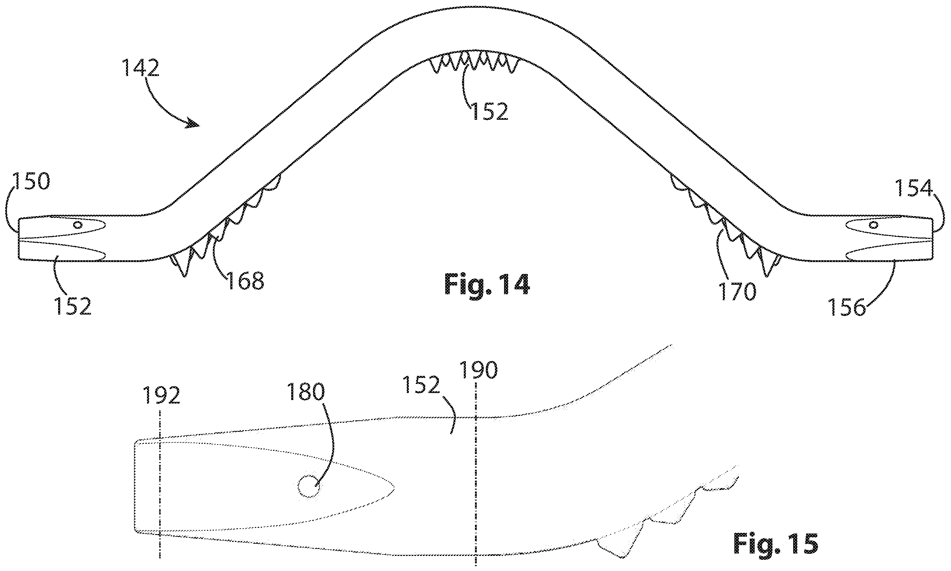

Fig. 14 is a front elevation of an alternative embodiment of neck rail. It is similar in most respects to the neck rail of Fig. 5, and will not be described further except insofar as it differs.

Like reference numerals will be used to denote like parts as in the preceding description of embodiments, but with the numbers advance by 100. Thus, instead of neck rail 42 having a first end 50 on a first straight end segment 52, and a second end 54 on a second straight end segment 56 (as in Fig. 5), Fig. 14 shows a neck rail 142 having a first end 150 on a first straight end segment 152, and a second end 154 on a second straight end segment 156, and so on.

Referring additionally to Figs. 15-17, the difference between the neck rail of Fig. 14 and that of Fig. 5 can be seen in the shape of the first and second end segments 152, 156. In the Fig. 14 embodiment, the end segments transition from a circular cross-section 190 to a generally square cross-section 192 (with a minor chamfering or rounding at the corners to assist in securing a snug fit in a complementary receiver). This shape is easier to make and provides a more robust engagement in a complementary receiver.

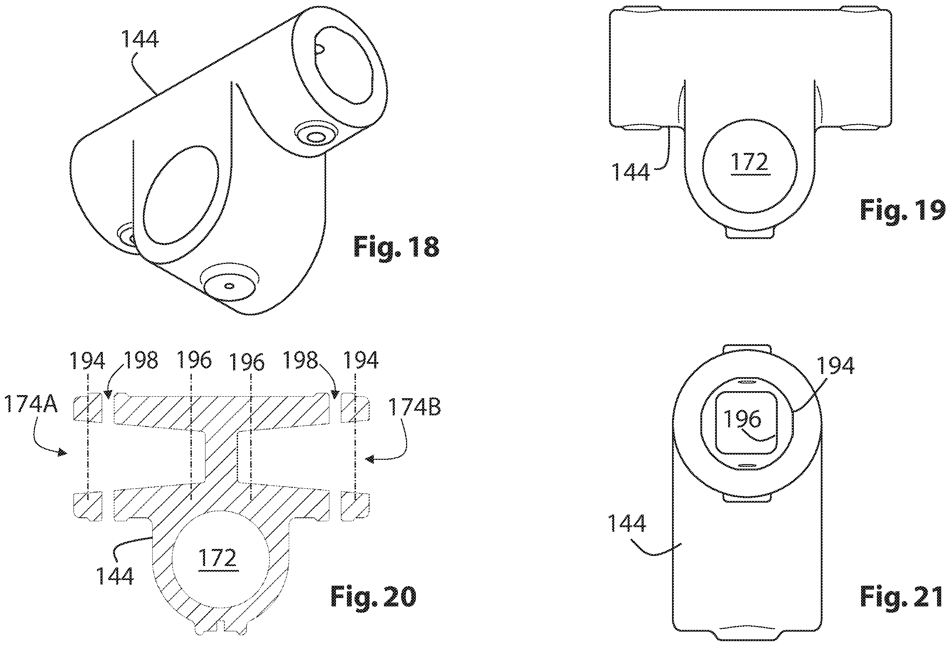

Figs. 18-21 show a receiver for use with the neck rail of Fig.14. The receiver is generally similar to that of Figs. 9-12, and again like reference numerals are used to denote like parts with the sequence advanced by 100.

The receiver 144 of Figs. 18-21 differs from that of Figs. 9-12 primarily in the internal shape of the sockets. Rather than a continuous bore with splined sections as in the earlier embodiment, a pair of blind or closed-end sockets 174A, 174B (Fig. 20) are provided opening to the outside at either end of the upper part of the receiver.

These sockets transition, from the outside in, from a circular cross section 194 near the open end to a square cross-section 196 near the blind end, and the cross-sectional area tapers also progressively into the sockets.

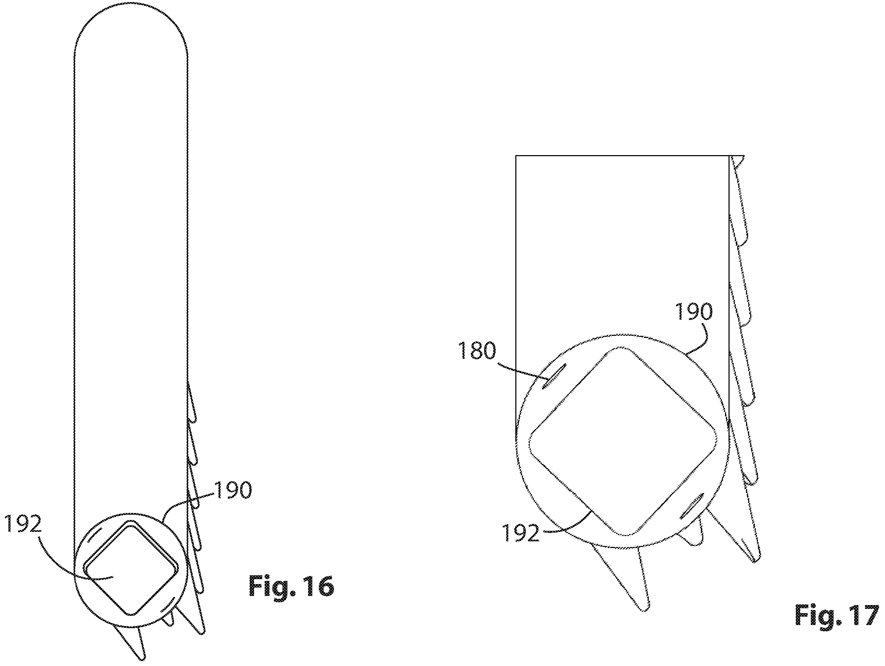

It will be appreciated that this receiver is adapted to receive securely a respective pair of end segments from neck rails of the type shown in Fig. 14. When those neck rails are flexed, their effective length can be shortened to insert them into the sockets, and while still flexed with the ends located just inside the sockets, the rails can be rotate to align the receiving hole 180 in the end segment (Figs. 15 and 17) with the receiving bore 198 in the receiver (Fig. 20).

The square end design of Figs. 14-21 is not designed for rotation of the neck rail to adjust the height of the neck-receiving portion. Instead it is for a fixed-height installation with a predetermined angular orientation of the neck rail with the neck scratcher protrusions facing downwardly and rearwardly.

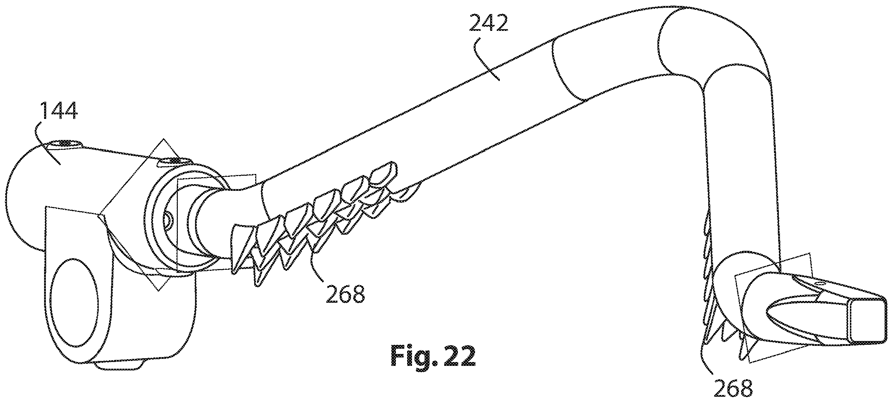

Fig. 22 shows the receiver 144 of Figs. 18-21 with a neck rail 242 in situ. The neck rail 242 is very similar to that of Fig. 14 but lacks the scratcher protrusions on the central convex part of the neck-receiving portion, while retaining such protrusions 268 on the curved transition portions leading to the straight end segments. Only one end is received in a receiver. (The drawing shows square planar drawing artefacts which are not present and are not part of the embodiment.)

The invention is not limited to the foregoing embodiments. The presence of features within the same embodiment which can be employed separately from one another in different designs of neck rail or receiver does not imply any teaching that these features are otherwise related or must be employed in conjunction with one another. The scope of the invention is defined by the claims which follow, when read in conjunction with the foregoing description and the accompanying drawings.

## Claims

1. A neck rail system for an animal stall comprising:
a neck rail (42) having first and second end segments defining a common axis therebetween and a middle segment connecting the end segments, the middle segment having a neck-receiving portion which is offset from the common axis and which is adapted to accommodate the neck of an animal in use; and
first and second receivers (44, 46) provided on either side of the stall and adapted to receive the first and second end segments respectively;
wherein the first receiver and first end segment of the rail are provided with complementary locking formations which can be brought into and out of engagement by axial displacement of the first end segment relative to the first receiver,
wherein said complementary locking formations prevent angular rotation of the neck rail (42) about the common axis relative to the first receiver when engaged with one another;
at least a portion of the neck rail (42) being resiliently flexible, permitting it to be flexed to decrease the distance between the end segments, and then to relax for axial engagement with the receivers;
whereby in use a flexing force may be applied to the neck rail (42) to reduce the distance between the first and second ends sufficiently to permit them to be inserted in the first and second receivers (44, 46) respectively, and the flexing force removed permitting the first and second ends to axially displace into the first and second receivers (44, 46) respectively and thereby engage said complementary locking formations.

2. A neck rail system according to claim 1, wherein the resiliently flexible portion of the neck rail (42) permits the first and second ends to be drawn closer together when a flexing force is applied and to move apart to a relaxed state when the flexing force is removed.

3. A neck rail system according to claim 1 or 2, wherein the second receiver and second end segment of the rail are also provided with complementary locking formations which can be brought into and out of engagement by axial displacement of the second end segment relative to the second receiver.

4. A neck rail system according to any preceding claim, wherein the first and second receivers (44, 46) are provided with openings for receiving the end segments, the openings being spaced apart by a distance less than the distance between the first and second end segments of the neck rail (42) when the neck rail (42) is in a relaxed state.

5. A neck rail system according to any preceding claim, wherein the first and second receivers (44, 46) each define a fully engaged position for the first and second end segments, respectively, and wherein the first and second receivers (44, 46) are spaced apart by a distance such that the first and second end segments reach the fully engaged position as the neck rail (42) relaxes towards or reaches a fully relaxed state.

6. A neck rail system according to any preceding claim, wherein the neck rail (42) is formed of a resilient, flexible moulded material having a convex curved neck-receiving portion connecting a pair of straight end segments, and further comprising an integrally formed set of protrusions on the inner surface of the convex curved neck-receiving portion which are adapted to serve as a scratcher for the neck of an animal.

7. A neck rail system according to any preceding claim, wherein said complementary locking formations define a plurality of fixed angular mounting orientations of the neck rail (42) relative to the first receiver.

8. A neck rail system according to any preceding claim, wherein the first receiver comprises a socket that receives the first end segment, such that when the end segment is fully inserted in the socket the complementary locking formations are engaged and the neck rail (42)is secured against rotation.

9. A neck rail system according to any preceding claim, wherein at least one of the first and second receivers (44, 46) is integrally formed as part of a double receiver member having a mount adapted for mounting on the side member of a stall, having said first or second receiver directed in the direction of said stall when mounted in position, and having a further receiver forming part of an adjacent neck rail (42) system directed in the direction of an adjacent stall on the other side of the side member.

10. A neck rail system according to any preceding claim, wherein said first receiver comprises a female socket having a portion of the complementary locking formations disposed internally of the socket and wherein said first end of the neck rail (42) comprises a male rail end dimensioned to fit in said female socket and having a portion of the complementary locking formations disposed on the exterior thereof.

11. A neck rail system according to any preceding claim, further comprising a securing mechanism to prevent the first end segment of the neck rail (42) from axially disengaging from the first receiver.

12. A neck rail system according to any preceding claim, wherein said complementary locking formations comprise a series of angularly spaced protrusions and corresponding angularly spaced recesses.

13. A neck rail system according to any preceding claim, wherein the complementary locking formations comprise a splined surface on an external cylindrical surface of one of the first end segment and first receiver, and a complementary splined surface on an internal socket surface of the other of the first end segment and first receiver.

14. A neck rail system according to any preceding claim, wherein the complementary locking formations comprise an external polygonal surface of one of the first end member and first receiver, and a complementary internal polygonal surface on the other of the first end member and first receiver.

15. A neck rail system according to claim 14, wherein the polygonal surfaces have a square cross-section.

## Patentansprüche

1. Nackenbegrenzungssystem für einen Tierstall, umfassend:
eine Nackenbegrenzung (42) mit einem ersten und einem zweiten Endsegment, die eine gemeinsame Achse zwischen sich definieren, und einem Mittelsegment, das die Endsegmente verbindet, wobei das Mittelsegment einen Nackenaufnahmebereich aufweist, der von der gemeinsamen Achse versetzt ist und der ausgelegt ist, um den Nacken eines betreffenden Tieres unterzubringen; und
eine erste und eine zweite Aufnahme (44, 46), die auf jeder Seite des Stalls bereitgestellt und ausgelegt sind, um das erste bzw. zweite Endsegment aufzunehmen;
wobei die erste Aufnahme und das erste Endsegment der Begrenzung mit komplementären Verriegelungsformationen versehen sind, die durch axiale Verlagerung des ersten Endsegments in Bezug auf die erste Aufnahme in und außer Eingriff gebracht werden können,
wobei die komplementären Verriegelungsformationen eine Winkeldrehung der Nackenbegrenzung (42) um die gemeinsame Achse in Bezug auf die erste Aufnahme verhindern, wenn sie miteinander in Eingriff stehen;
wobei mindestens ein Bereich der Nackenbegrenzung (42) elastisch flexibel ist, wodurch ermöglicht wird, dass diese sich biegen kann, um den Abstand zwischen den Endsegmenten zu verringern, und sich dann für einen axialen Eingriff mit den Aufnahmen lockern kann;
wobei im Einsatz eine Biegekraft auf die Nackenbegrenzung (42) aufgebracht werden kann, um den Abstand zwischen dem ersten und dem zweiten Ende ausreichend zu reduzieren, um zu ermöglichen, dass diese in die erste bzw. zweite Aufnahme (44, 46) eingeführt werden, und die Biegekraft entfernt wird, um zu ermöglichen, dass das erste und das zweite Ende axial in die erste bzw. zweite Aufnahme (44, 46) verlagert werden und dadurch mit den komplementären Verriegelungsformationen in Eingriff treten.

2. Nackenbegrenzungssystem nach Anspruch 1, wobei der elastisch flexible Bereich der Nackenbegrenzung (42) ermöglicht, dass das erste und das zweite Ende näher zueinander gezogen werden, wenn eine Biegekraft aufgebracht wird, und in einen gelockerten Zustand auseinander bewegt werden, wenn die Biegekraft entfernt wird.

3. Nackenbegrenzungssystem nach Anspruch 1 oder 2, wobei die zweite Aufnahme und das zweite Endsegment der Begrenzung ebenfalls mit komplementären Verriegelungsformationen versehen sind, die durch axiale Verlagerung des zweiten Endsegments in Bezug auf die zweite Aufnahme in und außer Eingriff gebracht werden können.

4. Nackenbegrenzungssystem nach einem der vorstehenden Ansprüche, wobei die erste und die zweite Aufnahme (44, 46) mit Öffnungen zum Aufnehmen der Endsegmente versehen sind, wobei die Öffnungen um einen Abstand beabstandet sind, der geringer als der Abstand zwischen dem ersten und dem zweiten Endsegment der Nackenbegrenzung (42) ist, wenn sich die Nackenbegrenzung (42) in einem gelockerten Zustand befindet.

5. Nackenbegrenzungssystem nach einem der vorstehenden Ansprüche, wobei die erste und die zweite Aufnahme (44, 46) jeweils eine Volleingriffsposition für das erste bzw. zweite Endsegment definieren und wobei die erste und die zweite Aufnahme (44, 46) um einen Abstand beabstandet sind, sodass das erste und das zweite Endsegment die Volleingriffsposition erreichen, wenn sich die Nackenbegrenzung (42) in Richtung eines vollständig gelockerten Zustands lockert oder diesen erreicht.

6. Nackenbegrenzungssystem nach einem der vorstehenden Ansprüche, wobei die Nackenbegrenzung (42) aus einem elastischen, flexiblen, geformten Material mit einem konvex gekrümmten Nackenaufnahmebereich, der ein Paar aus geraden Endsegmenten verbindet, gebildet ist, und ferner umfassend einen einstückig gebildeten Satz aus Vorsprüngen an der Innenfläche des konvex gekrümmten Nackenaufnahmebereichs, die ausgelegt sind, um als eine Kratzvorrichtung für den Nacken eines Tiers zu dienen.

7. Nackenbegrenzungssystem nach einem der vorstehenden Ansprüche, wobei die komplementären Verriegelungsformationen eine Vielzahl von festen winkeligen Befestigungsausrichtungen der Nackenbegrenzung (42) in Bezug auf die erste Aufnahme definieren.

8. Nackenbegrenzungssystem nach einem der vorstehenden Ansprüche, wobei die erste Aufnahme eine Muffe umfasst, die das erste Endsegment aufnimmt, sodass, wenn das Endsegment vollständig in die Muffe eingeführt ist, die komplementären Verriegelungsformationen in Eingriff stehen und die Nackenbegrenzung (42) gegen Drehung gesichert ist.

9. Nackenbegrenzungssystem nach einem der vorstehenden Ansprüche, wobei mindestens eine von der ersten und der zweiten Aufnahme (44, 46) einstückig als Teil eines Doppelaufnahmeelements gebildet ist, das eine Halterung aufweist, die zum Befestigen an dem Seitenelement eines Stalls ausgelegt ist, wobei die erste oder die zweite Aufnahme bei Befestigung in der Position in der Richtung des Stalls ausgerichtet wird und wobei ein weiteres eine Aufnahme bildendes Teil eines benachbarten Systems einer Nackenbegrenzung (42) in der Richtung eines benachbarten Stalls auf der anderen Seite des Seitenelements ausgerichtet wird.

10. Nackenbegrenzungssystem nach einem der vorstehenden Ansprüche, wobei die erste Aufnahme eine Buchse umfasst, bei der ein Bereich der komplementären Verriegelungsformationen innerhalb der Muffe angeordnet ist, und wobei das erste Ende der Nackenbegrenzung (42) ein vorspringendes Begrenzungsende umfasst, das bemessen ist, um in die Buchse zu passen, und bei dem ein Bereich der komplementären Verriegelungsformationen auf der Außenseite davon angeordnet ist.

11. Nackenbegrenzungssystem nach einem der vorstehenden Ansprüche, ferner umfassend einen Sicherungsmechanismus, um zu verhindern, dass sich das erste Endsegment der Nackenbegrenzung (42) axial von der ersten Aufnahme löst.

12. Nackenbegrenzungssystem nach einem der vorstehenden Ansprüche, wobei die komplementären Verriegelungsformationen eine Reihe von winkelig beabstandeten Vorsprüngen und entsprechende winkelig beabstandete Aussparungen umfassen.

13. Nackenbegrenzungssystem nach einem der vorstehenden Ansprüche, wobei die komplementären Verriegelungsformationen eine verzahnte Fläche an einer zylindrischen Außenfläche von einem von dem ersten Endsegment und der ersten Aufnahme und eine komplementäre verzahnte Fläche an einer Innenfläche der Muffe von dem anderen von dem ersten Endsegment und der ersten Aufnahme umfassen.

14. Nackenbegrenzungssystem nach einem der vorstehenden Ansprüche, wobei die komplementären Verriegelungsformationen eine vieleckige Außenfläche von einem von dem ersten Endelement und der ersten Aufnahme und eine komplementäre vieleckige Innenfläche an dem anderen von dem ersten Endelement und der ersten Aufnahme umfassen.

15. Nackenbegrenzungssystem nach Anspruch 14, wobei die vieleckigen Flächen einen viereckigen Querschnitt aufweisen.

## Revendications

1. Système de barre de nuque pour une étable comprenant :
une barre de nuque (42) ayant des premier et second segments d'extrémité définissant un axe commun entre eux et un segment médian reliant les segments d'extrémité, le segment médian ayant une partie de réception de nuque qui est décalée de l'axe commun et qui est adaptée pour recevoir la nuque d'un animal en cours d'utilisation ; et
des premier et second récepteurs (44, 46) prévus de chaque côté de la stalle et adaptés pour recevoir respectivement les premier et second segments d'extrémité ;
dans lequel le premier récepteur et le premier segment d'extrémité de la barre sont pourvus de formations de verrouillage complémentaires qui peuvent être mises en prise et libérées par déplacement axial du premier segment d'extrémité par rapport au premier récepteur,
dans lequel lesdites formations de verrouillage complémentaires empêchent la rotation angulaire de la barre de nuque (42) autour de l'axe commun par rapport au premier récepteur lorsqu'elles sont en prise entre elles ;
au moins une partie de la barre de nuque (42) étant élastiquement flexible, lui permettant d'être fléchie pour diminuer la distance entre les segments d'extrémité, puis de se détendre pour venir axialement en prise avec les récepteurs ;
moyennant quoi, lors de l'utilisation, une force de flexion peut être appliquée à la barre de nuque (42) pour réduire suffisamment la distance entre les première et seconde extrémités pour leur permettre d'être insérées dans les premier et second récepteurs (44, 46) respectivement, et la force de flexion une fois enlevée permettant aux première et seconde extrémités de se déplacer axialement dans les premier et second récepteurs (44, 46) respectivement et ainsi venir en prise avec lesdites formations de verrouillage complémentaires.

2. Système de barre de nuque selon la revendication 1, dans lequel la partie élastiquement flexible de la barre de nuque (42) permet aux première et seconde extrémités d'être rapprochées lorsqu'une force de flexion est appliquée et de s'écarter pour atteindre un état relâché lorsque la force de flexion est retirée.

3. Système de barre de nuque selon la revendication 1 ou 2, dans lequel le second récepteur et le second segment d'extrémité de la barre sont également pourvus de formations de verrouillage complémentaires qui peuvent être mises en prises et libérées par déplacement axial du second segment d'extrémité par rapport au second récepteur.

4. Système de barre de nuque selon une quelconque revendication précédente, dans lequel les premier et second récepteurs (44, 46) sont pourvus d'ouvertures pour recevoir les segments d'extrémité, les ouvertures étant espacées d'une distance inférieure à la distance entre les premier et second segments d'extrémité de la barre de nuque (42) lorsque la barre de nuque (42) est dans un état détendu.

5. Système de barre de nuque selon une quelconque revendication précédente, dans lequel les premier et second récepteurs (44, 46) définissent chacun une position complètement en prise pour les premier et second segments d'extrémité, respectivement, et dans lequel les premier et second récepteurs (44, 46) sont espacés l'un de l'autre d'une distance telle que les premier et second segments d'extrémité atteignent la position complètement en prise lorsque la barre de nuque (42) se détend pour atteindre ou atteint un état complètement détendu.

6. Système de barre de nuque selon une quelconque revendication précédente, dans lequel la barre de nuque (42) est formée d'un matériau moulé souple et élastique ayant une partie de réception de nuque incurvée convexe reliant une paire de segments d'extrémité droits, et comprenant en outre un ensemble formé d'un seul tenant de saillies sur la surface intérieure de la partie de réception de nuque incurvée convexe qui sont adaptées pour servir de grattoir pour la nuque d'un animal.

7. Système de barre de nuque selon une quelconque revendication précédente, dans lequel lesdites formations de verrouillage complémentaires définissent une pluralité d'orientations de montage angulaires fixes de la barre de nuque (42) par rapport au premier récepteur.

8. Système de barre de nuque (42) selon une quelconque revendication précédente, dans lequel le premier récepteur comprend une douille qui reçoit le premier segment d'extrémité, de sorte que lorsque le segment d' extrémité est complètement inséré dans la douille, les formations de verrouillage complémentaires sont en prise et la barre de nuque (42) est bloquée en rotation.

9. Système de barre de nuque selon une quelconque revendication précédente, dans lequel au moins l'un des premier et second récepteurs (44, 46) est formé d'un seul tenant en tant que partie d'un double élément récepteur ayant un support adapté pour être monté sur l'élément latéral d'une stalle, ayant ledit premier ou second récepteur dirigé dans la direction de ladite stalle lorsqu' il est monté en position, et ayant un autre récepteur faisant partie d'un système de barre de nuque (42) adjacent dirigé dans la direction d'une stalle adjacente de l'autre côté de l'élément latéral.

10. Système de barre de nuque selon une quelconque revendication précédente, dans lequel ledit premier récepteur comprend une douille femelle ayant une partie des formations de verrouillage complémentaires disposées à l'intérieur de la douille et dans lequel ladite première extrémité de la barre de nuque (42) comprend une extrémité de barre mâle dimensionnée pour rentrer dans ladite douille femelle et ayant une partie des formations de verrouillage complémentaires disposées à l'extérieur de celle-ci.

11. Système de barre de nuque selon une quelconque revendication précédente, comprenant en outre un mécanisme de fixation pour empêcher le premier segment d'extrémité de la barre de nuque (42) de se libérer axialement du premier récepteur.

12. Système de barre de nuque selon une quelconque revendication précédente, dans lequel lesdites formations de verrouillage complémentaires comprennent une série de saillies angulairement espacées et des évidements angulairement espacés correspondants.

13. Système de barre de nuque selon une quelconque revendication précédente, dans lequel les formations de verrouillage complémentaires comprennent une surface cannelée sur une surface cylindrique externe de l'un parmi le premier segment d'extrémité et le premier récepteur, et une surface cannelée complémentaire sur une surface de douille interne de l'autre parmi le premier segment d'extrémité et le premier récepteur.

14. Système de barre de nuque selon une quelconque revendication précédente, dans lequel les formations de verrouillage complémentaires comprennent une surface polygonale externe de l'un parmi le premier élément d'extrémité et le premier récepteur, et une surface polygonale interne complémentaire sur l'autre parmi le premier élément d'extrémité et le premier récepteur.

15. Système de barre de nuque selon la revendication 14, dans lequel les surfaces polygonales ont une section transversale carrée.
